# EUROPÄISCHE PATENTSCHRIFT

(11) **EP 0 842 720 B1**
(45) Veröffentlichungstag und Bekanntmachung des Hinweises auf die Patenterteilung: **05.12.2001**
(21) Anmeldenummer: 97116442.1
(22) Anmeldetag: 22.09.1997
(51) Int. Cl.: B21F 35/00

(54) **Verfahren zur Herstellung einer Schraubenfeder**
Method for the manufacture of a coil spring
Procédé pour la fabrication d'un ressort hélicoidal

(30) Priorität: 15.11.1996 DE 19647288
(43) Veröffentlichungstag der Anmeldung: 20.05.1998
(73) Patentinhaber: Volkswagen Aktiengesellschaft, 38436 Wolfsburg (DE)
(72) Erfinder: Eisenberg, Stephan, Dr., 38116 Braunschweig (DE); Betzold, Jakob, 38465 Brome (DE)

(56) Entgegenhaltungen:
- DE-A- 1 752 313
- DE-A- 2 234 633
- DE-A- 2 835 511
- US-A- 4 245 819
- US-A- 4 719 683
- DATABASE WPI Week 7602 Derwent Publications Ltd., London, GB; AN 76-03248x(02) XP002088266 & SU 445 502 A (TEBENKO), 15. Mai 1975
- HOESCH HOENLIMBURG AG: "Warm geformte Federn" 1987 , DRUCKEREI & VERLAG W. STUMPF , BOCHUM, DE XP002088264 * Seite 147, rechte Spalte, Absatz 3 * * Seite 190, linke Spalte, Absatz 2 *
- DATABASE WPI Week 7513 Derwent Publications Ltd., London, GB; AN 75-d4846w XP002088267 & SU 428 837 A (BOCHAREV ET AL.) , 22. Oktober 1974
- DATABASE WPI Week 7722 Derwent Publications Ltd., London, GB; AN 77-39474y XP002088268 & SU 522 882 A (TERRESTIAL PHYSICS) , 3. November 1976
- STAHLWERKE BRÜNINGHAUS GMBH, WERK WERDOL: "Technische Daten Fahrzeugfedern Teil 1: Drehfedern" , ABT. INFORMATION- WERBUNG DER STAHLWERKE SÜDWESTFALEN AG , DE XP002088265 * Seite 131; Abbildung 98 * * Seite 136, Zeile 1 - Zeile 8 * * Seite 134; Abbildung 99 *

## Beschreibung

Die Erfindung betrifft ein Verfahren zur Herstellung einer Schraubenfeder aus einem Stab bzw. Draht und eine nach diesem Verfahren hergestellte Schraubenfeder.

Bei der Herstellung von Schraubendruck- und Schraubenzugfedern unterscheidet man zwei verschiedene, hinsichtlich ihrer technischen Bedeutung etwa gleichrangige Formgebungsverfahren, die Warm- und Kaltformgebung. Das beim Kaltformen zum Einsatz kommende Vormaterial hat häufig bereits vor der Verarbeitung, also im Anlieferungszustand, die Festigkeitseigenschaften, die von der fertigen Feder verlangt werden, d. h., es hat vorab bereits eine geeignete Vergütebehandlung, z. B. eine Ölschluß- oder Induktivvergütung erfahren. Federn aus derartigem Vormaterial werden vorwiegend auf Windeautomaten geformt, wobei Drähte mit Durchmessern von weniger als 1 mm bis maximal etwa 15 mm verarbeitbar sind. Kaltgeformt werden jedoch Schraubenfedem nicht selten auch aus weichen bzw. unvergüteten Drähten mit Durchmessern von etwa 8 bis 20 mm. Die Vergütung erfolgt in solchen Fällen nach der Formgebung, also an der Feder selbst. Das bei der Warmformgebung verwendete Vormaterial ist in der Regel unvergüteter, gewalzter, gezogener, geschliffener oder gedrehter Rundstahl in Stabform mit Durchmessern von ca. 8 bis 60 mm. Üblicherweise werden die Stäbe in erdgasbeheizten, temperaturgeregelten Hubbalkenöfen austenitisiert, d. h. je nach Stahlzusammensetzung auf Temperaturen zwischen 820 und 860 °C erwärmt. Dieser Temperaturbereich ist gleichzeitig jener, in dem die Federn zunächst geformt und aus dem heraus sie unmittelbar im Anschluß an die Formgebung in Öl abgeschreckt bzw. gehärtet werden. Die Formgebung selbst geschieht auf Wickelmaschinen, bei denen das Stabmaterial um eine Welle, den sogenannten Wickeldom, gewickelt wird.

Die Belastbarkeit von Schraubenfedem, insbesondere von kaltgewickelten Schraubenfedem wird durch die herstellungsbedingten Zugeigenspannungen an der Federinnenseite begrenzt. Bei der Federauslegung muß die Feder aus diesem Grunde stets überdimensioniert werden, um ein Versagen an der Federinnenseite verursacht durch die Zugeigenspannungen auszuschließen.

Die Zugeigenspannungen können durch Spannungsarmglühen bei einer Temperatur von 550°C bis 650 °C beseitigt werden, wobei die Federn jedoch einen bestimmten Verzug erleiden. Bei den meisten Federn ist eine Wärmebehandlung bei diesen relativ hohen Temperaturen nicht möglich, da damit gleichzeitig ein Festigkeitsabfall verbunden ist.

Eine weitere Möglichkeit besteht darin, die Zugeigenspannungen durch Festigkeitsstrahlen in Druckspannungen umzuwandeln, dieses ist jedoch nur bis zur einer begrenzten Tiefe möglich. Bei kaltgewickelten Schraubenfedern ist dies z. B. bis zu einer Tiefe von ca. 250 µm möglich. Die durch das Kugelstrahlen erzeugten Druckeigenspannungen in der Oberfläche der Schraubenfeder wirken sich in der Regel lebensdauersteigemd aus.

Das Problem der Zugeigenspannungen und deren Beseitigung ist z. B. in dem "Handbuch Federn"; Meissner, Wanke; 2. Aufl. 1993, Verlag Technik GmbH Berlin München beschrieben.

In der deutschen Patentschrift DE 36 33 058 wird vorgeschlagen, die mechanischen Werkstoffeigenschaften warmgewickelter Schraubenfedern, dadurch zu verbessern, daß der Stab nach dem Erwärmen und vor dem Wickeln in der stabilen Austenitphase durch Verdrehen um seine Längsachse eine plastische Verformung unter Einhaltung seiner äußeren Gestalt aufgezwungen wird.

In der deutschen Auslegeschrift DE-AS 27 40 637 wird vorgeschlagen, einen Draht im kalten Zustand zunächst in mindestens einer Windung aufzuspulen und anschließend auf den Dom zu führen. Der Schraubenfeder wird dadurch während des Wickelns eine innere Vorspannung eingeprägt.

Die in beiden Schriften vorgeschlagenen Lösungen betreffen die Verbesserung der mechanischen Eigenschaften von Schraubenfedem durch gezieltes Einbringen einer Vorspannung vor bzw. während des Wickelns. Ein gezielter Abbau der Zugeigenspannungen an der Federinnenseite wird dadurch nicht erreicht.

Die US 4,719,683 gibt ein Verfahren zur Herstellung einer Schraubenfeder an, bei welchem eine vorhandene Schraubenfeder mit einem gegebenen Durchmesser umgekehrt gewickelt wird (reverse winding), was bedeutet, daß das Federmaterial genau entgegengesetzt zu der ursprünglichen Wicklungsrichtung erneut gewickelt wird. Hierfür kann in einer Ausführungsform des dortigen Verfahrens die Feder zunächst für die Dauer des Umwicklunsgvorgangs radial verkleinert werden, d.h. der Durchmesser wird temporär verkleinert, und sodann nach außen neu gewickelt werden. In einer anderen Ausführungsform wird die Feder zunächst temporär vergrößert, d.h. der Durchmesser wird temporär vergrößert, und sodann nach innen neu gewickelt In beiden Fällen ist das gewünschte Endprodukt eine Schraubenfeder mit erhöhter Federkraft bei im wesentlichen gleichem Durchmesser wie die ursprüngliche Schraubenfeder. Das zuvor beschriebene Verfahren ist relativ kompliziert und erfordert relativ aufwendige Wickelapparate.

Aufgabe der Erfindung ist es nun ein Verfahren zur Herstellung einer Schraubenfeder zu liefern, mit dem die im Anschluß an die Herstellung der Schraubenfeder vorhandenen Zugeigenspannungen an der Federinnenseite verringert werden können, und dadurch die Belastbarkeit der Schraubenfeder zu verbessern.

Die Aufgabe wird erfindungsgemäß durch die Merkmale des Patentanspruchs 1 gelöst. Vorteilhafte Aus- und Weiterbildungen sind in den Unteransprüchen gegeben.

Im Anschluß an das erste Wickeln auf dem Durchmesser D1 liegt der bekannte Eigenspannungszustand vor, d. h. an der Federinnenseite sind Zugeigenspannungen und an der Federaußenseite sind Druckeigenspannungen vorhanden. Durch die sich anschließende zweite plastische Verformung, das Aufwickeln auf den größeren Durchmesser D2, werden je nach Verformungsgrad die Zugeigenspannungen an der Federinnenseite verringert bzw. in Druckeigenspannungen umgewandelt.

Weiterhin kann durch das zweite Wickeln die maximale Zugeigenspannung in der zur Federinnenseite gerichteten Stabhälfte verringert werden.

Durch die Verringerung der Zugeigenspannungen bzw. Vertiefung der Druckeigenspannungen an der Federinnenseite wird die Belastbarkeit der Feder erheblich verbessert. Der Werkstoff kann über den gesamten Querschnitt der Schraubenfeder besser ausgenutzt werden, da das die Belastbarkeit begrenzende Maximum der Zugeigenspannungen an der Federinnenseite geringer ist und weiter im Innern des Federquerschnittes liegt. Die Versagenswahrscheinlichkeit der Schraubenfeder durch die Zugeigenspannung ist dadurch erheblich reduziert.

Eine nach der Erfindung zweifach gewickelte Schraubenfeder kann nun für eine Belastung kleiner dimensioniert werden, als dies für eine bisherige Schraubenfeder erforderlich wäre.

Wird eine derartige Feder z. B. zur Federung eines Pkws verwendet, dann bedeutet dies eine Gewichtsreduzierung der Feder und des Pkws und findet ihren Nutzen schließlich in einem geringeren Verbrauch des Pkws.

Die ungünstigen Zugeigenspannungen an der Federinnenseite werden durch das zweifache Wickeln in einer Tiefe von vorzugsweise mehr als 300 µm mit geringen Beiträgen erzeugt. Durch ein sich anschließendes Festigkeitsstrahlen können Druckeigenspannungen bis in eine Tiefe von mehr als 400 µm an der Federinnenseite erzeugt werden.

Die mechanischen Eigenschaften der Schraubenfeder können weiter verbessert werden, in dem die Schraubenfeder zwischen dem ersten und dem zweiten Wickeln spannungsarm geglüht wird.

Weiterhin wird vorgeschlagen die Schraubenfeder nach dem zweiten Wickeln auf eine Temperatur von 200 °C aufzuheizen. Hierdurch wird der Spannungszustand vergleichmäßigt und lokale Spannungsspitzen ausgeglichen, d. h. die Feder wird homogener belastbar.

Die Erfindung wird nachfolgend anhand eines Ausführungsbeispiels näher erläutert. Die zugehörigen Zeichnungen zeigen:
- Figur 1: Schraubenfeder mit einem ersten Durchmesser D1;
- Figur 2: Schraubenfeder mit einem zweiten Durchmesser D2;
- Figur 3: Belastung der Schraubenfeder beim Wickeln auf den ersten Durchmesser D1;
- Figur 4: Eigenspannungszustand nach dem Wickeln auf den ersten Durchmesser D1;
- Figur 5: Belastung beim Aufwickeln auf den zweiten Durchmesser D2;
- Figur 6: Eigenspannungszustand nach dem Wickeln auf den zweiten Durchmesser D2.

In Figur 1 ist eine Schraubenfeder 1 mit dem ersten Durchmesser D1 und in Figur 2 eine Schraubenfeder 1 mit dem zweiten Durchmesser D2 zu erkennen. Der erste Durchmesser D1 ist kleiner als der zweite Durchmesser D2.

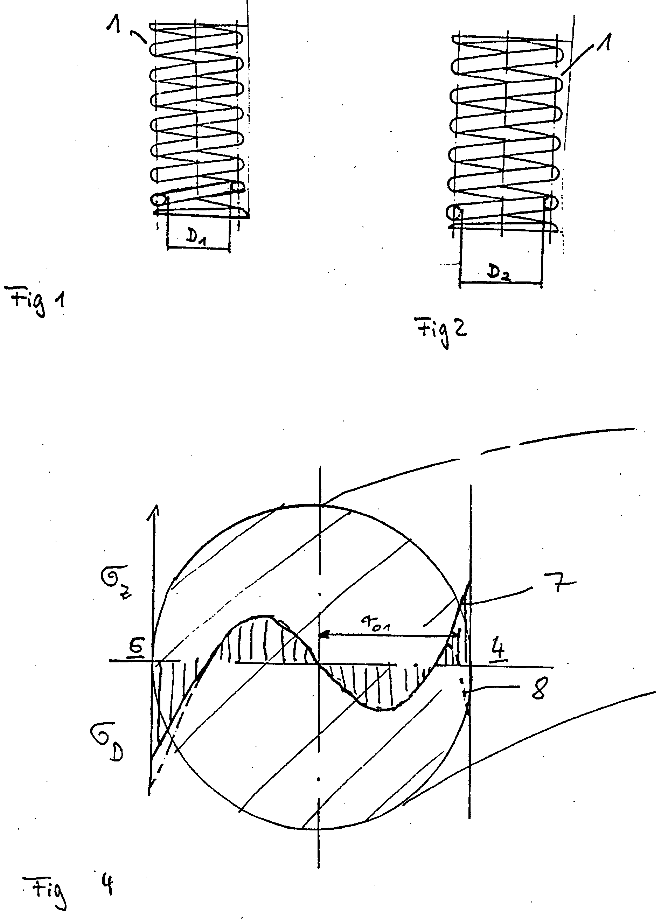

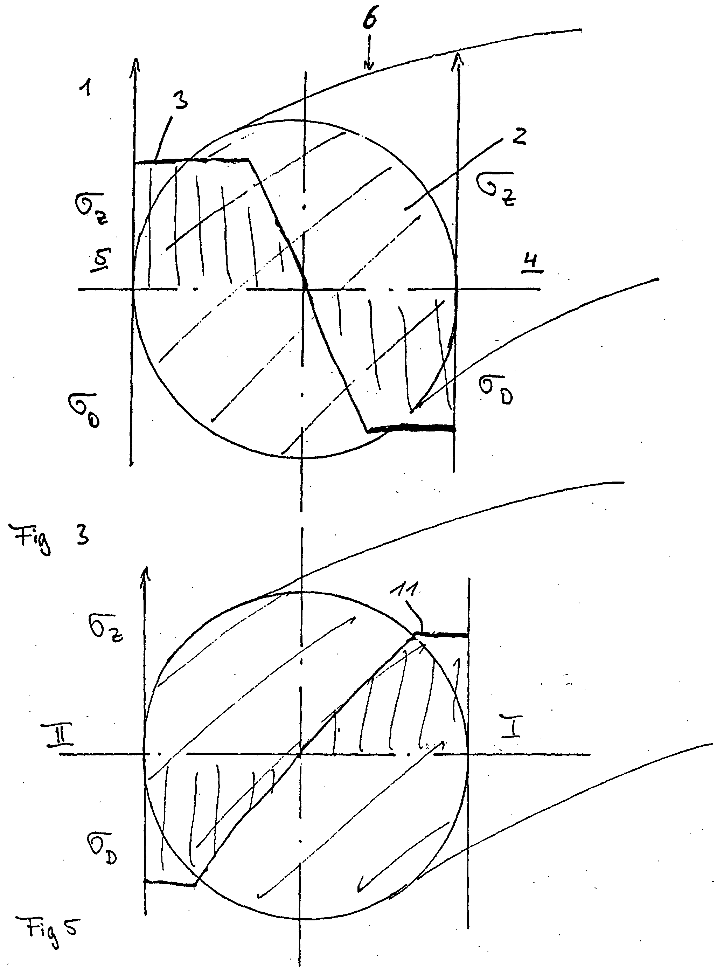

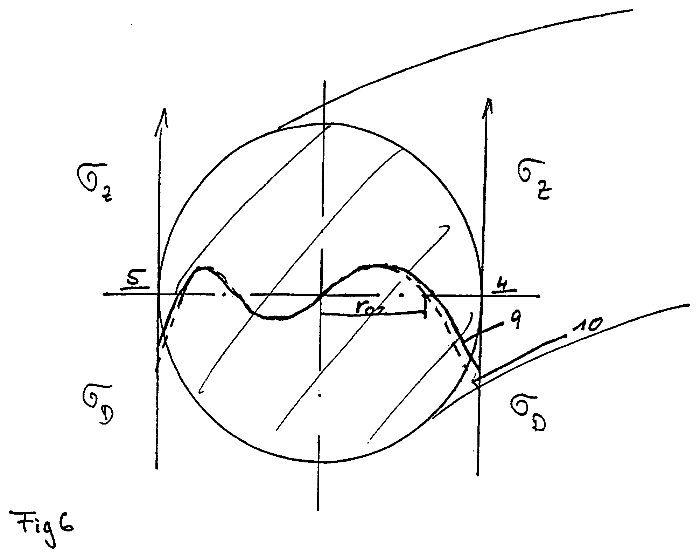

In Figur 3 bis Figur 6 sind die Belastungen, die bei den beiden Wickelvorgängen auf den Querschnitt des Stabes 6 bzw. der Schraubenfeder 1 einwirken und die sich daraus ergebenden Eigenspannungszustände, dargestellt. Oberhalb der horizontalen Symmetrielinie liegen Zugspannungen σ_{Z} unterhalb liegen Druckspannungen σ_{D} vor.

In Figur 3 ist schematisch die Kurve 3 der Belastung dargestellt, die zu der plastischen Verformung des Stabs 6 beim ersten Wickeln auf den ersten Durchmesser D1 führt.

Auf den Stabquerschnitt 2 wirkt während der Verformung auf die zur Federinnenseite 4 gerichteten Hälfte des Stabquerschnittes 2 eine Druckspannung σ_{D} und auf die zur Federaußenseite gerichtete Hälfte des Stabquerschnittes 2 eine Zugspannung σ_{Z} ein. Im Bereich der horizontalen Abschnitte der Kurve 3 wird der Stab 6 plastisch verformt, während zur Mitte des Stabquerschnittes 2 im Bereich der Neigung der Kurve 3 die Belastung eine elastische Biegung des Stabes 6 bewirkt.

In Figur 4 ist der Eigenspannungszustand, dargestellt durch die Linie 7, der Schraubenfeder 1 nach dem ersten Wickeln mit der in Figur 3 dargestellten Belastung dargestellt.

Die an der Federinnenseite 4 vorliegenden Zugeigenspannungen können durch Festigkeitsstrahlen bis zu einer begrenzten Tiefe in Druckeigenspannungen umgewandelt werden. Der Verlauf der Eigenspannungen nach einem eventuellen Festigkeitsstrahlen ist durch die gestrichelte Linie 8 dargestellt. Die Zugeigenspannungen an der Federinnenseite 4 können durch das Festigkeitsstrahlen bis zu einer begrenzten Tiefe, hier dargestellt durch den Radius r₀₁, in Druckeigenspannungen umgewandelt werden.

Nach dem ersten Wickeln wird die Schraubenfeder 1 dann auf den zweiten Durchmesser D2 aufgewickelt, wobei der erste Durchmesser D1 kleiner als der zweite Durchmesser D2 ist.

Die beim zweiten Wickeln wirkende Belastung ist in Figur 5 dargestellt. In diesem Fall ist die Belastung, dargestellt durch die Kurve 11, entgegengesetzt zu der Belastung beim ersten Wickeln, dargestellt durch die Kurve 3 in Figur 3, gerichtet. Der sich nach dem zweiten Wickeln auf den zweiten Durchmesser D2 einstellende Verlauf der Eigenspannungen ist in Figur 6 durch die Linie 9 dargestellt. Die Druckeigenspannungen an der Federinnenseite 4 sowie an der Federaußenseite 5 können durch ein sich anschließendes Festigkeitsstrahlen weiter erhöht bzw. vertieft werden. Der Verlauf der Eigenspannungen nach dem Festigkeitsstrahlen ist durch die gestrichelte Linie 10 dargestellt.

Nach dem Festigkeitsstrahlen liegen Druckeigenspannungen bis in eine Tiefe, dargestellt durch den Radius r₀₂, vor. Der Radius r₀₂ ist kleiner als der Radius r₀₁ nach dem ersten Wickeln.

## Patentansprüche

1. Verfahren zur Herstellung einer einen Innendurchmesser (D2) aufweisenden Schraubenfeder aus einem Draht bzw. Stab, wobei der Draht bzw. Stab zunächst auf einen ersten Durchmesser (D1) gewickelt wird und die hierbei entstandene, einen vorläufigen Innendurchmesser (D1) aufweisende Schraubenfeder anschließend durch Aufwickeln auf einen zweiten Durchmesser (D2), der größer als der erste Durchmesser (D1) ist, auf den Innendurchmesser (D2) aufgeweitet wird.

2. Verfahren nach Anspruch 1, **dadurch gekennzeichnet, daß** die Schraubenfeder (1) nach dem Aufwickeln auf den zweiten Durchmesser (D2) festigkeitsgestrahlt wird.

3. Verfahren nach Anspruch 1 oder 2, **dadurch gekennzeichnet, daß** die Schraubenfeder (1) zwischen dem ersten und dem zweiten Wickeln spannungsarm, insbesondere bei einer Temperatur von 550 °C bis 650 °C, geglüht wird.

4. Verfahren nach einem der Ansprüche 1 bis 3, **dadurch gekennzeichnet, daß** die Schraubenfeder nach dem Wickeln auf den zweiten Durchmesser (D2) auf eine Temperatur von ca. 200 °C aufgeheizt wird.

5. Schraubenfeder, hergestellt durch ein Verfahren nach einem der Ansprüche 1 bis 4, **gekennzeichnet durch** Druckeigenspannungen an der Federinnenseite (4) in einer Tiefe von mehr als 300 µm.

6. Schraubenfeder, hergestellt durch ein Verfahren nach einem der Ansprüche 2 bis 4, **gekennzeichnet durch** Druckeigenspannungen an der Federinnenseite (4) in einer Tiefe von mehr als 400 µm.

## Claims

1. Process for producing a coil spring, which has an internal diameter (D2), from a wire or rod, in which the wire or rod is initially wound to a first diameter (D1), and the resultant coil spring, which has a temporary internal diameter (D1), is then widened by being wound out to a second diameter (D2), which is larger than the first diameter (D1), to the internal diameter (D2).

2. Process according to Claim 1, **characterized in that** the coil spring (1) is blasted or peened, in order to increase its strength, after it has been wound out to the second diameter (D2).

3. Process according to Claim 1 or 2, **characterized in that** the coil spring (1) undergoes stress-relief annealing, in particular at a temperature of from 550°C to 650°C, between the first winding and the second winding.

4. Process according to one of Claims 1 to 3, **characterized in that** the coil spring is heated to a temperature of approx. 200°C after it has been wound to the second diameter (D2).

5. Coil spring produced using a process according to one of Claims 1 to 4, **characterized by** residual compressive stresses on the inner side (4) of the spring down to a depth of more than 300 µm.

6. Coil spring produced using a process according to one of Claims 2 to 4, **characterized by** residual compressive stresses on the inner side (4) of the spring down to a depth of more than 400 µm.

## Revendications

1. Procédé pour la fabrication d'un ressort hélicoïdal présentant un diamètre intérieur (D2) à partir d'un fil ou d'une barre, le fil ou la barre étant tout d'abord enroulé à un premier diamètre (D1) et le ressort hélicoïdal ainsi créé, présentant un diamètre intérieur provisoire (D1), étant ensuite élargi au diamètre intérieur (D2) en le déroulant à un deuxième diamètre (D2) qui est plus grand que le premier diamètre (D1).

2. Procédé selon la revendication 1, **caractérisé en ce que** le ressort hélicoïdal (1) est exposé à un rayonnement de consolidation après avoir été déroulé au deuxième diamètre (D2).

3. Procédé selon la revendication 1 ou 2, **caractérisé en ce que** le ressort hélicoïdal (1) est exposé à recuit léger de détensionnement, plus particulièrement à une température comprise entre 550 °C et 650 °C, entre le premier et le deuxième enroulement.

4. Procédé selon l'une des revendications 1 à 3, **caractérisé en ce que** le ressort hélicoïdal est chauffé à une température de 200 °C environ après l'enroulement au deuxième diamètre (D2).

5. Ressort hélicoïdal, fabriqué par un procédé selon l'une des revendications 1 à 4, **caractérisé par** des contraintes de pression intrinsèques au niveau de l'intérieur du ressort (4) à une profondeur de plus de 300 *µ*m.

6. Ressort hélicoïdal, fabriqué par un procédé selon l'une des revendications 2 à 4, **caractérisé par** des contraintes de pression intrinsèques au niveau de l'intérieur du ressort (4) à une profondeur de plus de 400 *µ*m.
